# EUROPEAN PATENT APPLICATION

(11) **EP 1 568 529 A1**
(43) Date of publication of application: **31.08.2005**
(21) Application number: 04004411.7
(22) Date of filing: 26.02.2004
(51) Int. Cl.: B60J 5/00, B62D 25/22

(54) **Sill arrangement for a vehicle**

(71) Applicant: Ford Global Technologies, LLC, Dearborn, MI 48126 (US)
(72) Inventor: Strand, Göran, 416 60 Göteborg (SE); Eklund, Bernt, 432 38 Varberg (SE)
(74) Representative: Spitmann, Knut Hermann

(57) **Abstract**

1. The present invention relates to a sill arrangement (10) for increasing the entrance and exit area of a vehicle. The sill arrangement comprises a sill (13) which is pivotably arranged between a first upper (A) and a second lower (B) end position. The sill (13) comprises at least a first (17) and a second (18) part. In the first position (A) of the sill (13) the first part (17) constitutes an interior wall of the sill (13) located inside the vehicle compartment and the second part (18) then constitutes an uppermost sill end which adjoins a door (12) of the vehicle in a closed position thereof. In the second position (B) of the sill (13) the first part (17) constitutes the uppermost part of the sill (13) and the second part (18) constitutes an exterior member of the sill (13) so that the pivot motion is such that the height of the uppermost part of the sill (13) in the second position (B) is lower than the height of the uppermost part of the sill (13) in the first position (A).

## Description

The present invention relates to a sill arrangement for increasing the entrance and exit area of a vehicle. The sill arrangement comprises a sill which is pivotably arranged between a first upper and a second lower end position. The sill comprises at least a first and a second part. In the first position of the sill the first part constitutes an interior wall of the sill which is located inside the vehicle compartment and the second part then constitutes an uppermost sill end which adjoins a door of the vehicle in a closed position thereof.

### BACKGROUND OF THE INVENTION

In many situations such as when entering or exiting a vehicle, or when loading the vehicle compartment or trunk with food, groceries and other cargo it is apparent that it is desirable to obtain an increasing entrance and exit space.

In the present day situation vehicles provided with so called gull wing doors are well-known. This type of vehicles may be provided with pivotable sills for providing a large entering and exiting space at the same time as the gull-wing door is opened up. Then the sills are pivoted in an outward direction away from the side exterior panel of the vehicle.

A drawback of the described type of pivotable sills is that they are bulky and voluminous, particularly in the protruding pivoted position of the sills, which may be a problem at parking lots and other narrow spaces. An additional drawback is the risk to stumble and fall over the pivoting sills since they protrude considerably in the pivoted position.

Still another drawback of the described type of pivotable sills is that a generally dirty exterior side panel of the protruding pivoting sills may soil and filth the passenger's trousers or pants, skirts, socks and shoes when the passenger enters and exits the vehicle or even stands next to the vehicle.

### SUMMARY OF THE INVENTION

It is an object of the present invention to provide a sill arrangement for providing a passenger such as a driver more entrance and exiting space. Moreover, it is an object to provide a passenger an increased entering and exit area when loading and unloading food, groceries and other cargo into the vehicle compartment or trunk. Particularly, if the height level of the sill is lowered, the food groceries and other cargo are easier to lift into or out of the vehicle compartment due to the lowered height level.

It is also an object of the present invention to provide a sill arrangement which provides a minor risk for stumble and fall over the sill itself when entering and exiting the vehicle. At the same time, it is an object to provide a sill arrangement which doesn't protrude from the vehicle and thereby fits at narrow parking lots and other spaces.

It is a further object to achieve a sill arrangement which doesn't filth and soil the lower part of the dress of the passenger when he or she enters and exits the vehicle, or stands next to the vehicle and the actual sill.

These objects are achieved in accordance with the present invention by means of a sill arrangement in a vehicle which comprises a sill which is pivotably arranged between a first upper and a second lower end position as claimed in claim 1, in the second position the first part constitutes the uppermost part of the sill and the second part constitutes an exterior member of the sill so that the pivot motion is such that the height of the uppermost part of the sill in the second position is lower than the height of the uppermost part of the sill in the first position.

In this context, the terms "height" and "height level" refers to the height above the ground onto the vehicle is parked. Thus, when the height of the sill and the height of the floor are compared, it may be the height level from the ground to the upper part (or uppermost) of the sill and the height level from the ground to the upper (or uppermost) part of the floor, which are compared. However, the terms "height" and "height level" can also refer to the vertical position in an orthogonally system of coordinates.

By means of the invention, the sill is pivoted between a first upper end position and a second lower end position so that the area for entering and exiting the vehicle increases when the sill is lowered to the second position. In this way, food, goods and other cargo which is to be loaded into the vehicle are more easily lifted and placed into the compartment of the vehicle due to the lowered height of the sill. The inventive sill arrangement is also applicable for trunk sills.
By means of the invention, it is a decreased risk that a passenger which enters or exits the vehicle sill stumbles and falls over the inventive sill arrangement since a first embodiment of the inventive sill arrangement doesn't protrude out of the vehicle.
By means of the invention, the sill is pivoted from a first to a second end position so that the lowered uppermost part of the sill in the second end position, which previously been the clean interior wall of the sill, is a clean exterior part of the vehicle. In this way, the risk for the passenger to filth and soil his or hers trousers, pants, skirts, socks and shoes is decreased when the passenger is located next to the vehicle.

In a first preferred embodiment of the invention, the sill comprises a third part which constitutes an exterior panel part of the sill in the first position thereof. Preferably, the sill is pivotable to the second position, in which the third part is located substantially below a floor and/or an eventual floor beam of the vehicle.
By means of the invention, the dirty exterior part is removed and well-hidden under the vehicle when entering, exiting or loading the vehicle compartment or trunk with food, groceries and other cargo.

Preferably, the sill comprises a substantially open hollow beam profile, the flanges of which comprises the first, the second and the third part of the sill. For example, the substantially open hollow beam profile may be constituted of a U profile. Then the flanges of the U profile is not substantially perpendicular to each other but the angle between the described second and the third flange is substantially acute.

In the preferred embodiment, the sill is pivotably arranged around a pivot axle which is longitudinally located adjacent or onto an edge of the compartment floor or the eventual floor beam arranged in connection thereto. More in detail, the pivot axle is constituted of a substantially horizontal axis running in the longitudinal direction along, such as parallel to the edge of the compartment door or along the floor beam arranged in connection thereto.

Advantageously, if the pivot axis is arranged substantially in the height level of the upper part of the compartment floor or adjacent thereto, the height of the uppermost part of the sill in the second position is equal to the height of the floor level of the vehicle. Furthermore, the level of the uppermost part of the sill positioned in the second position is substantially equal to the level of the adjoining compartment floor of the vehicle. In this way it is easier to lift in food, goods and other cargo into the vehicle compartment.

Advantageously, if the height of the first part of the sill positioned in the first position is not greater than the length from the pivot axle to the exterior part of the sill at the same vertical level as the pivot axle, the sill does not protrude from the adjoining side exterior panels of the vehicle. By means of the open hollow beam profile and the described pivot axle, the open hollow beam profile encases the edge of the floor and/or the eventual floor beam when the sill is positioned in the second position.
By means of the invention, the risk for a passenger to stumble and fall over the sill is decreased when the height level or the sill is lowered and the sill doesn't protrude from the exterior side panels.

Preferably, the sill is pivotable from the first position to the second position during a manual or automatic opening of the door.

### BRIEF DESCRIPTION OF THE DRAWINGS

The invention will be described in the following by way of example only and with reference to the embodiments illustrated in the drawings, in which
- Fig. 1a: shows in a perspective view a principal sketch of the sill arrangement with a closed vehicle door,
- Fig. 1b: shows in a perspective view a principal sketch of the pivoting sill arrangement during an opening sequence of the vehicle door,
- Fig. 1c: shows in a perspective view a principal sketch of the sill arrangement in an entrance and exiting position with an open vehicle door, and
- Fig. 2: shows a cross-section of the sill arrangement, in the first upper position A and in the second lower position B, taken along the line A:A in Fig. 1c.

### DETAILED DESCRIPTION OF PREFERRED EMBODIMENTS

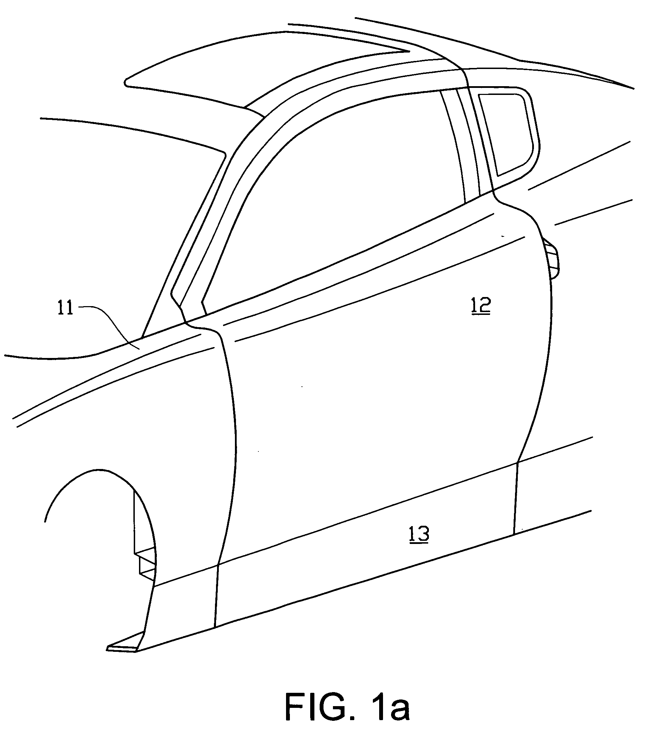

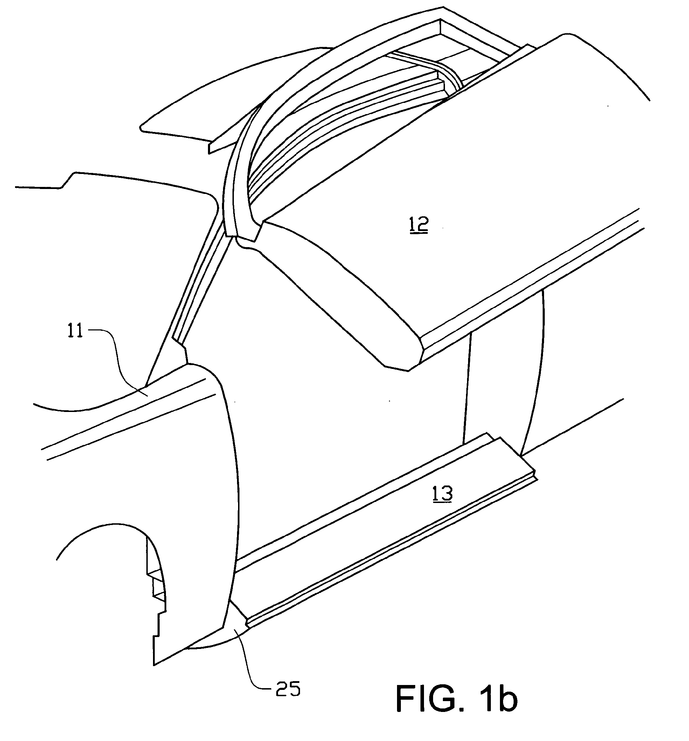

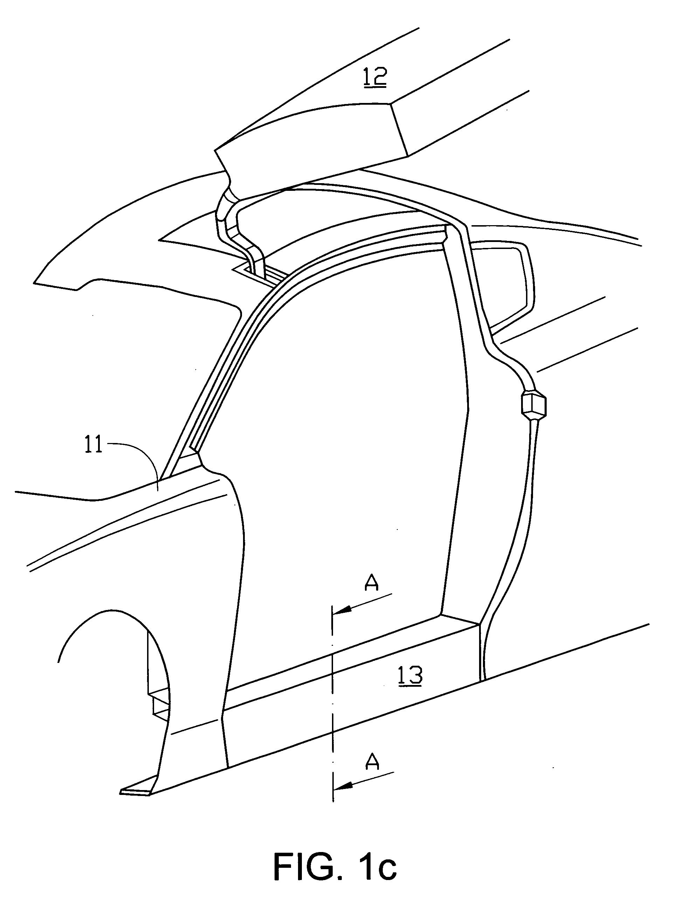

In the drawings, reference numeral 10 generally denotes a sill arrangement for increasing the entrance and exit area of a vehicle, see Fig. 1c.

The vehicle 11 comprises at least a door 12 and a door sill 13, see Fig. 1a. In a preferred embodiment of the invention, the door 12 is of a gull-wing type, which also can be seen in an opening sequence of said door 12 in Figs. 1b-1c. However, the door 12 can be of any type and construction. For example, the door 12 can be of a conventional type such as a driver's door, a passenger's door, a rear seat door or even a trunk door (neither is shown in the figures). That is, the sill arrangement 10 can alternatively be provided to a door or an opening of a trunk in a second preferred embodiment of the invention (not shown in the figures).

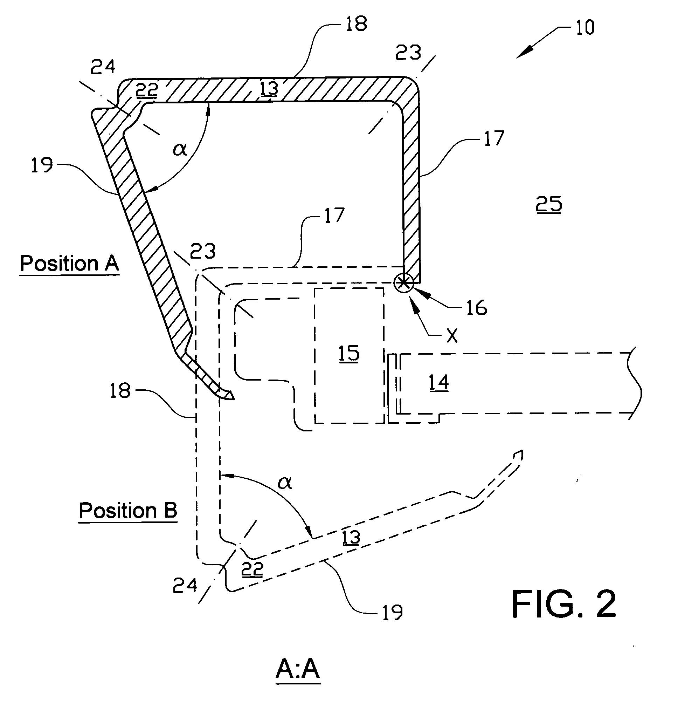

In greater detail, the sill 13 itself comprises an open hollow beam profile 22, see Fig. 2. In the first preferred embodiment, the open hollow beam profile 22 is manufactured in a similar way as a conventional U-profile. However, in order to follow the exterior design of the sill of the vehicle, one of the protruding flanges is not perpendicularly bended to the middle flange of the U-profile but instead bended in an acute angle, see Fig. 2. Thus, the open hollow beam profile 22 is preferably bended at two positions 23 and 24, so that the sill 13 is firstly divided into a first part 17 when bended substantially perpendicularly at the first position 23. Thereafter the remaining open hollow beam profile 22 is divided into a second part 18 and a third part 19 when bended in a second position 24. As already mentioned above, the second bending leads to an acute angle α between the second 18 and the third part 19 of the open hollow beam profile 22.

Alternatively, the open hollow beam profile 22 may comprise at least two separate parts but preferably three separate parts 17, 18 and 19, which then may be composed to the open hollow beam profile 22. Except for the open hollow beam profile 22, the sill 13 may comprise rims 25 acting as side seals for the sides of the open hollow beam profile 22, see Figs. 1b-1c.

As can be seen in Fig. 2, the sill 13 is pivotably arranged around a pivot axle X. The pivot axle X is located longitudinally along, or even parallel with an edge of a floor 14 or an eventual floor beam 15 of the vehicle. The eventual floor beam 15 is then provided adjacent on or in connection to the actual floor 14 of the compartment. The pivot axle X can run adjacent, onto or into the floor 14 or the floor beam 15. In practise, the sill 13 can be hinged in an axle of hinge which then is located along the pivot axle X.
In case of a trunk, the pivot axle X is preferably located longitudinally along an edge of a trunk floor or an eventual trunk floor beam in the similar way as in the door sill case (neither is shown in the figures). In other aspects the inventive sill arrangement is principally arranged in the corresponding way to a trunk of a vehicle.

The sill 13 is pivotable between a first upper end position A and a second lower end position B. The sill 13 is positioned in the first position A during driving of the vehicle and when the vehicle is locked and parked, etc. The sill 13 is positioned in the second position B when the passenger enters and exits the vehicle and in a possible loading food, goods and other cargo-situation into the vehicle compartment 18.

In practice, a first end of the first part 17 of the sill 13 is preferably pivotably provided into the floor 14 or the eventual floor beam 15 of the vehicle, see Fig. 2. The first part 17 is located inside the vehicle compartment 25 when the sill 13 is positioned in a first position A. Preferably, the first part 17 then constitutes an interior wall or interior surface and is then essentially vertically positioned. In position A of the sill 13 the second part 17 of the sill 13 is an uppermost part of the sill 13 which is substantially horizontally positioned. Furthermore, the second part 18 of the sill 13 also adjoins the bottom of the vehicle door 12 when the door 12 is in a closed position. The third part 19 of the sill 13 is constituted of the exterior side panel of the sill 13 in position B.

For example, in one of the following situations the sill(s) 13 is displaced to the second position B: when a driver or a passenger enters and exits the vehicle, in a possible loading goods, food and other cargo situation into the compartment 25 of the vehicle.

The displacement (s) of the sill(s) 13 may preferably occur automatically as the door 12 is automatically or manually or opened. This can be performed by means of the remote control to the door or by opening the door manually. In another embodiment, the sill 13 itself can be opened on command. Then the sill 13 can also be opened by means of a remote control. However, it is also possible to manually displace the sill 13 from the first position A to the second position B.

The inventive sill arrangement 10 operates according to the following. A passenger, or a passenger-to-be of the vehicle opens the driver's door automatically by means of a remote control (not shown in the figures), see Fig 1b. Then the inventive sill arrangement 10 pivots around the pivot axle X in a downward direction from the first upper basic position A of the sill 13 towards the lower position B of the sill 13, see Fig. 1c.

The described open hollow beam profile 22 encases the edge of the floor 14 and the eventual floor beam 15 when the sill 13 pivots from the first position A towards the second position B. For clarifying, since the first part 17 of the sill 13 is preferably hinged in the upper part of the floor 14 edge, the sill 13 preferably pivots around the floor edge in the downward pivot motion.

In the second position B of the sill 13, the first part 17 constitutes the uppermost part of the sill 13 which then is substantially horizontally positioned. Then the second part 18 constitutes an exterior panel part of the sill 13, which is substantially vertically positioned. In position B the third part 19 of the sill 13 constitutes an exterior panel of the sill 13 which is located substantially below the floor level of the vehicle. When seen in a perspective view, the third part 19 is well hidden below the vehicle and the other parts of the sill 13 in the second position B, see Fig. 1c.

In conclusion, the height of the second part 18 of the sill 13 in the first position A, which constitutes the uppermost part of the sill 13 in the first position A, is higher positioned than the first part 17 of the sill 13 in the second position B, which constitutes the uppermost part of the sill 13 in the second position B.

By means of the invention, the vertical uppermost position of the sill 13 is lowered and the entrance and exit area into and out of the vehicle compartment is thereby increased. In this way, it is easier to enter and exit the vehicle and also to load and unload food, groceries and other cargo since they don't need to be lifted so high in the vertical direction.

Furthermore, the exterior sides of the sill 13 in the second position B are very clean since they are constituted of the clean interior of the sill 13 of the first position A.

In the second preferred embodiment of the invention, the vertical position of the sill of the trunk may be lowered in a corresponding way. Accordingly, it may be easier to load and unload food, groceries and other cargo into the vehicle since they don't need to be lifted so high in a vertical direction. Also in the second preferred embodiment, it is obviously an advantage that a clean exterior panel of the sill of the trunk in the second position may be clean.

In the opposite way, the passenger closes the door 12 by means of the remote control. Then, or before that, the sill 13 pivots around the pivot axle X in an upward direction towards position A. In position A of the sill, the first 17, the second 18 and the third part 19 of the sill 13 takes their origin basic positions.

The invention has been described above and illustrated in the drawings by way of example only and the skilled person will recognize that various modifications may be made without departing from the scope of the invention as defined by the appended claims.

## Claims

1. A sill arrangement (10) for increasing the entrance and exit area of a vehicle, the sill arrangement comprises a sill (13) which is pivotably arranged between a first upper (A) and a second lower (B) end position, the sill (13) comprises at least a first (17) and a second (18) part, in the first position (A) of the sill (13) the first part (17) constitutes an interior wall of the sill (13) located inside the vehicle compartment and the second part (18) then constitutes an uppermost sill end which adjoins a door (12) of the vehicle in a closed position thereof,
**characterised in that** in the second position (B) of the sill (13) the first part (17) constitutes the uppermost part of the sill (13) and the second part (18) constitutes an exterior member of the sill (13) so that the pivot motion is such that the height of the uppermost part of the sill (13) in the second position (B) is lower than the height of the uppermost part of the sill (13) in the first position (A).

2. An arrangement as claimed in claim 1,
**characterised in that** the first part (17) is substantially vertically and the second part (18) is substantially horizontally positioned in the first position (A), and that the first part (17) is substantially horizontally and the second part (18) is substantially vertically positioned in the second position (B).

3. An arrangement as claimed in claims 1 and 2,
**characterised in that** the sill (13) comprises a third part (19) which constitutes an exterior panel part (21) of the sill (13) in the first position (A) thereof.

4. An arrangement as claimed in claims 3,
**characterised in that** the third part (19) is located substantially below a floor (14) and/or an eventual floor beam (15) of the vehicle in the second position (B) of the sill (13).

5. An arrangement as claimed in any of the preceding claims,
**characterised in that** the sill (13) comprises a substantially open hollow beam profile, the flanges of which comprises the first (17), the second (18) and the third (19) part of the sill (13).

6. An arrangement as claimed in claims 4 and 5,
**characterised in that** the sill (13) is pivotably arranged around a pivot axle (X) which is longitudinally located adjacent or onto to the edge of the floor (14) or the eventual floor beam (15) of the vehicle.

7. An arrangement as claimed in claims 4 - 6,
**characterised in that** the open hollow beam profile (22) encases the edge of the floor (14) and/or the eventual floor beam (15) in the second position (B).

8. An arrangement as claimed in claim 6 - 7,
**characterised in that** the height of the first part (17) of the sill (13) positioned in the first position (A) is not greater than the length from the pivot axle (X) to the exterior panel part (21) of the sill (13) at the same vertical level as the pivot axle (X).

9. An arrangement as claimed in claims 4 - 6,
**characterised in that** the level of the uppermost part of the sill (13) positioned in the second position (B) is less or substantially equal to the level of the adjoining compartment floor (14) of the vehicle.

10. An arrangement as claimed in any of the preceding claims,
**characterised in that** the sill (13) is pivotable from the first position (A) to the second position (B) during a manual or automatic opening of the door (12).
